# EUROPEAN PATENT SPECIFICATION

(11) **EP 4 299 425 B1**
(45) Date of publication and mention of the grant of the patent: **15.01.2025**
(21) Application number: 23182344.4
(22) Date of filing: 29.06.2023
(51) Int. Cl.: B62K 5/10, B62J 7/06, B62K 5/08, B62K 5/027, B62K 5/05

(54) **STRADDLE-TYPE VEHICLE**
GRÄTSCHSITZFAHRZEUG
VÉHICULE DE TYPE À ENFOURCHER

(30) Priority: 01.07.2022 JP 2022107268
(43) Date of publication of application: 03.01.2024
(73) Proprietor: Yamaha Hatsudoki Kabushiki Kaisha, Iwata-shi, Shizuoka 438-8501 (JP)
(72) Inventor: Imari, Sadanobu, Iwata-shi, Shizuoka (JP)
(74) Representative: Grünecker Patent- und Rechtsanwälte PartG mbB

(56) References cited:
- EP-A2- 1 484 239
- WO-A1-2018/037175
- JP-A- 2021 020 595

## Description

The present invention relates to a straddle-type vehicle according to the preamble of independent claim 1. Such a straddled vehicle can be taken from the prior art document EP 1 484 239 A2.

JP 2021-020595 A discloses a vehicle that adopts a cantilever support structure in order to fasten a support member extending in a front-and-rear direction of a carrier (seat support and child seat) at two points ahead of and behind an upper surface of a front-and-rear cross member, and maintains a state of being substantially horizontal with respect to a road surface in an upright state and a lean state.

In the vehicle described in JP 2021-020595 A, since the carrier has a cantilever support structure by the carrier support in a case where a load is loaded on the carrier, a shearing force and a bending moment are generated in the carrier support and a force for bending the carrier support is applied. In addition, since a large bending stress is applied to the carrier support depending on a position and a weight of the load, the rigidity of the carrier support is required.

In a case where the vehicle travels on a rough road (uneven road surface) in a state in which a load is loaded, the entire carrier vibrates up and down due to an up-and-down movement of the load loaded on the carrier with the up-and-down movement of the vehicle body, and a shearing force and a bending moment in the up-and-down direction act on the carrier support. In a case where the vehicle travels on a rough road while leaning in a left-and-right direction, a shearing force and a bending moment act on the carrier support in the left-and-right direction in addition to the up-and-down direction.

In a case where such a carrier support structure is adopted in a vehicle on which an engine is mounted, unlike the vehicle targeted in JP 2021-020595 A, it is assumed that the vibration further increases, and thus it is necessary to reduce the above-described vibration. In order to reduce the vibration, it is considered to increase a pipe diameter of the carrier support to increase the rigidity of the carrier support and to reduce the vibration generated in the carrier. However, since the carrier support is increased in size by such a structure, it is necessary to improve the rigidity of the fixing portion that fixes the carrier support. However, in a case where the rigidity of the fixing portion is increased, a peripheral structure of the fixing portion is increased in size, and thus the fixing portion and the carrier support interfere with other members when the vehicle leans, and a linkage is increased in size to avoid the interference.

An object of the present invention is to provide a straddle-type vehicle having high support rigidity for a carrier while reducing an increase in size of the vehicle.

According to the present invention said object is solved by a straddle-type vehicle having the features of independent claim 1. Preferred embodiments are laid down in the dependent claims.

A straddle-type vehicle according to the present disclosure includes:
a body frame;
a right front wheel and a left front wheel that are steerable and are disposed on the left and right when viewed from the front of the vehicle;
a linkage that changes a relative position of front wheels connected to the right front wheel and the left front wheel;
a right shock absorber that supports the right front wheel at a lower portion thereof and absorbs a relative displacement of the right front wheel with respect to the linkage;
a left shock absorber that supports the left front wheel at a lower portion thereof and absorbs a relative displacement of the left front wheel with respect to the linkage;
a power unit support that supports a power unit on the body frame; and
a carrier disposed ahead of the linkage, in which
the linkage includes
   a right side member that supports an upper portion of the right shock absorber such that the upper portion is able to turn about a right steering axis extending in an up-and-down direction of the body frame,
   a left side member that supports an upper portion of the left shock absorber such that the upper portion is able to turn about a left steering axis located parallel to the right steering axis,
   an upper cross member that supports an upper portion of the right side member at a right end portion of the upper cross member such that the upper portion is able to turn about an upper right leaning axis extending in a front-and-rear direction of the body frame, and supports an upper portion of the left side member at a left end portion of the upper cross member such that the upper portion is able to turn about an upper left leaning axis located parallel to the upper right leaning axis, and
   a lower cross member that supports a lower portion of the right side member at a right end portion of the lower cross member such that the lower portion is able to turn about a lower right leaning axis located parallel to the upper right leaning axis, and supports a lower portion of the left side member at a left end portion of the lower cross member such that the lower portion is able to turn about a lower left leaning axis located parallel to the upper left leaning axis,
the upper cross member and the lower cross member are connected to the body frame so as to be able to rotate about respective rotation axes thereof,
the carrier is supported on the lower cross member by a plurality of carrier supports, and
at least two of the carrier supports are provided at positions shifted in the up-and-down direction when viewed from a side of the vehicle.

In the straddle-type vehicle according to the present disclosure, the lower cross member includes fixing portions to which the respective carrier supports are fixed, and when the lower cross member is virtually divided into a right region and a left region with respect to a body center line when the vehicle is viewed from the front, at least a portion of the fixing portions is disposed in the right region and the left region.

According to the straddle-type vehicle of the present disclosure, the carrier supports can be fixed by at least two fixing portions and a load applied to the carrier supports can be dispersed in at least one of the right region and the left region of the lower cross member. Therefore, the carrier can be stably attached.

In the straddle-type vehicle according to the present disclosure, the lower cross member includes at least three fixing portions.

According to the straddle-type vehicle of the present disclosure, since the lower cross member includes at least three fixing portions that fix the respective carrier supports, the load applied to the carrier supports can be further dispersed, and the carrier can be stably attached.

In the straddle-type vehicle according to the present disclosure, the carrier includes a lamp attachment portion to which a lamp is attached.

According to the straddle-type vehicle of the present disclosure, since the lamp attachment portion is provided in the carrier, light can be illuminated forward even when a package is loaded on the carrier.

In the straddle-type vehicle according to the present disclosure, the lower cross member includes at least one fixing portion ahead of a front end portion of the upper cross member.

According to the straddle-type vehicle of the present disclosure, since the fixing portion is located ahead of the front end portion of the upper cross member, the upper cross member and the lower cross member do not interfere with each other when the vehicle turns. Therefore, the carrier can be stably attached.

In the straddle-type vehicle according to the present disclosure, the fixing portion is provided at an upper portion of the lower cross member and is located ahead of a front end portion of the upper cross member when the vehicle turns.

According to the straddle-type vehicle of the present disclosure, since the fixing portion is located ahead of the front end portion of the upper cross member even when the vehicle turns, the upper cross member and the lower cross member do not interfere with each other. Therefore, the carrier can be stably attached.

### ADVANTAGEOUS EFFECTS OF INVENTION

According to the above, since the carrier supports are fixed to the lower cross member at positions shifted in the up-and-down direction of the vehicle, a vehicle in which a load applied to the carrier support can be dispersed and the carrier is stably attached can be provided.

### BRIEF DESCRIPTION OF DRAWINGS

Fig. 1 is a side view of an entire vehicle according to an embodiment of the present teaching;
Fig. 2 is a front view showing a front portion of the vehicle shown in Fig. 1;
Fig. 3 is a side view showing a left shock absorber and a left front wheel;
Fig. 4 is a plan view showing the front portion of the vehicle in Fig. 1;
Fig. 5 is a plan view showing the front portion of the vehicle in Fig. 1 when the vehicle is steered;
Fig. 6 is a front view showing the front portion of the vehicle in Fig. 1 when the vehicle leans;
Fig. 7 is a front view showing the front portion of the vehicle in Fig. 1 when the vehicle leans and is steered;
Fig. 8 is a top view showing an example of a carrier according to the embodiment of the present disclosure;
Fig. 9 is a perspective view showing a state in which the carrier is fixed;
Fig. 10 is a side view showing a state in which the carrier is fixed in the present embodiment;
Fig. 11 is a side view showing a positional relationship between an upper cross member and a lower cross member in an upright state and a lean state of the vehicle;
Fig. 12 is a side view of another embodiment showing a state in which carriers are fixed at shifted positions of an upper portion and a lower portion of a lower cross member;
Fig. 13 is a front view and a side view of another embodiment showing a state in which carriers are fixed at shifted positions of an upper portion and a lower portion of a lower cross member; and
Fig. 14 is a front view and a side view of another embodiment showing a state in which carriers are fixed at shifted positions of an upper portion and a lower portion of a lower cross member.

### DESCRIPTION OF EMBODIMENTS

A specific example of a straddle-type vehicle according to an embodiment of the present disclosure will be described below with reference to the drawings.

In the accompanying drawings, an arrow F denotes the direction ahead of a vehicle. An arrow B denotes the direction behind the vehicle. An arrow U denotes the direction above the vehicle. An arrow D denotes the direction below the vehicle. An arrow R denotes the direction on the right of the vehicle. An arrow L denotes the direction on the left of the vehicle. Said directions also refer to direction of view of a rider sitting on the vehicle.

A vehicle turns with a body frame leaning in a left-and-right direction of the vehicle relative to a vertical direction with regard to a road surface. Then, in addition to the directions based on the vehicle, directions based on the vehicle body frame are defined. In the accompanying drawings, an arrow FF denotes the direction ahead of the vehicle body frame. An arrow FB denotes the direction behind the vehicle body frame. An arrow FU denotes the direction above the vehicle body frame. An arrow FD denotes the direction below the vehicle body frame. An arrow FR denotes the direction on the right of the vehicle body frame. An arrow FL the direction denotes on the left of the vehicle body frame.

In this description, a "front-and-rear direction of the body frame," a "left-and-right direction of the body frame," and an "up-and-down direction of the body frame" refers to a front-and-rear direction, a left-and-right direction and an up-and-down direction based on the body frame as viewed from a rider who rides the vehicle. "The side of the body frame" denotes on the right or on the left of the body frame.

When referred to in this description, an expression reading "something extends in the front-and-rear direction of the vehicle body frame" includes a situation in which something extends in the front-and-rear direction of the vehicle body frame while being inclined in relation to the front-and-rear direction of the vehicle body frame and that something extends with a gradient which is closer to the front-and-rear direction of the vehicle body frame rather than the left-and-right direction and the up-and-down direction of the vehicle body frame.

In this description, an expression reading "something extends in the left-and-right direction of the vehicle body frame" includes a situation in which something extends in the left-and-right direction of the vehicle body frame while being inclined in relation to the left-and-right direction of the vehicle body frame and that something extends with a gradient which is closer to the left-and-right direction of the vehicle body frame rather than the front-and-rear direction and the up-and-down direction of the vehicle body frame.

In this description, an expression reading "something extends in the up-and-down direction of the vehicle body frame" includes a situation in which something extends in the up-and-down direction of the vehicle body frame while being inclined in relation to the up-and-down direction of the vehicle body frame and that something extends with a gradient which is closer to the up-and-down direction of the vehicle body frame rather than the front-and-rear direction and the left-and-right direction of the vehicle body frame.

In this description, an "upright state of the vehicle" or the "vehicle stands upright" refers to a state in which the vehicle remains not steered and the up-and-down direction of the body frame coincides with a vertical direction. In this state, the direction based on the vehicle coincides with the direction based on the body frame. When the vehicle is turning with the body frame leaning to the left or right from the vertical direction, the left-and-right direction of the vehicle does not coincide with the left-and-right direction of the body frame. The up-and-down direction of the vehicle does not coincide with the up-and-down direction of the body frame, too. However, the front-and-rear direction of the vehicle coincides with the front-and-rear direction of the body frame.

In this description, "rotation or rotating" refers to a member that is displaced at an angle of 360 degrees or more about a center axis thereof. In this description, "turn or turning" refers to a member that is displaced at an angle of less than 360 degrees about a center axis thereof.

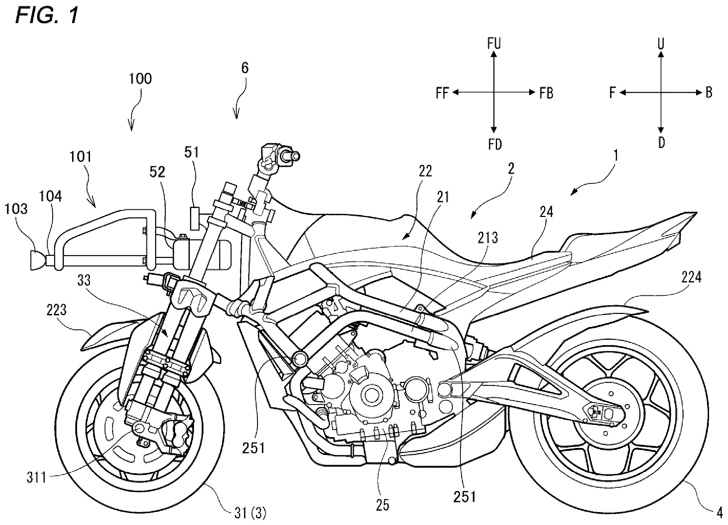

Referring to Figs. 1 to 7, a vehicle 1 according to preferred embodiments of the present teaching will be described. The vehicle 1 is driven by power generated from a power source and including a body frame that is able to lean and two front wheels which are aligned side by side in a left-and-right direction of the body frame.

Fig. 1 is a left side view of the entire vehicle 1 as viewed from the left of the vehicle. The vehicle 1 includes a vehicle main body 2, a pair of left and right front wheels 3, a rear wheel 4, a linkage 5, and a steering force transmission 6.

The vehicle main body 2 includes a body frame 21, a body cover 22, a seat 24, and a power unit 25. In Fig. 1, the vehicle 1 is in the upright state. The following description with reference to Fig. 1 is based on the premise that the vehicle 1 is in the upright state.

The body frame 21 extends in a front-and-rear direction of the vehicle 1. The body frame 21 includes a headpipe 211 and a link support 212.

The headpipe 211 supports an upstream side steering shaft 60, which will be described below, so as to turn. The headpipe 211 extends in an up-and-down direction of the body frame 21.

The link support 212 is provided ahead of the headpipe 211 in the front-and-rear direction of the vehicle 1. The link support 212 supports the linkage 5 so as to turn.

The body frame 21 includes a power unit support 251 behind the headpipe 211 in the front-and-rear direction of the vehicle 1. The power unit support 251 supports the power unit 25. The power unit 25 supports the rear wheel 4 in a swingable manner. The power unit 25 includes a power source such as an engine, an electric motor, or a battery and a device such as a transmission. The power source generates power by which the vehicle 1 is driven.

The body cover 22 includes a pair of left and right front fenders 223 and a rear fender 224. The body cover 22 is a body element which covers at least a portion of body elements which are mounted on the vehicle 1 such as the pair of left and right front wheels 3, the body frame 21, and the linkage 5. In the present embodiment, the body cover 22 covers at least a portion of the linkage.

At least portions of the pair of left and right front fenders 223 are disposed directly above the pair of left and right front wheels 3, respectively.

At least a portion of the rear fender 224 is disposed directly above the rear wheel 4 to cover at least a portion of the rear wheel 4 in top-view.

At least a portion of the rear wheel 4 is disposed below the seat 24. At least a portion of the rear wheel 4 is disposed directly below the rear fender 224.

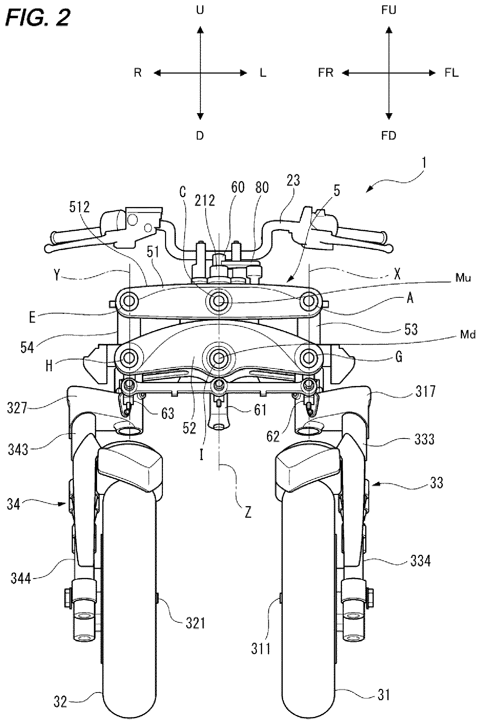

Fig. 2 is a front view of the front portion of the vehicle 1 as viewed from the front of the body frame 21. In Fig. 2, the vehicle 1 is in the upright state. The following description with reference to Fig. 2 is based on the premise that the vehicle 1 is in the upright state.

The pair of left and right front wheels 3 include a left front wheel 31 and a right front wheel 32. The left front wheel 31 and the right front wheel 32 are provided in the left-and-right direction of the vehicle body frame 21. The right front wheel 32 is provided on the right of the left front wheel 31 on the body frame 21.

The vehicle 1 includes a left shock absorber 33, a right shock absorber 34, a left bracket 317, and a right bracket 327.

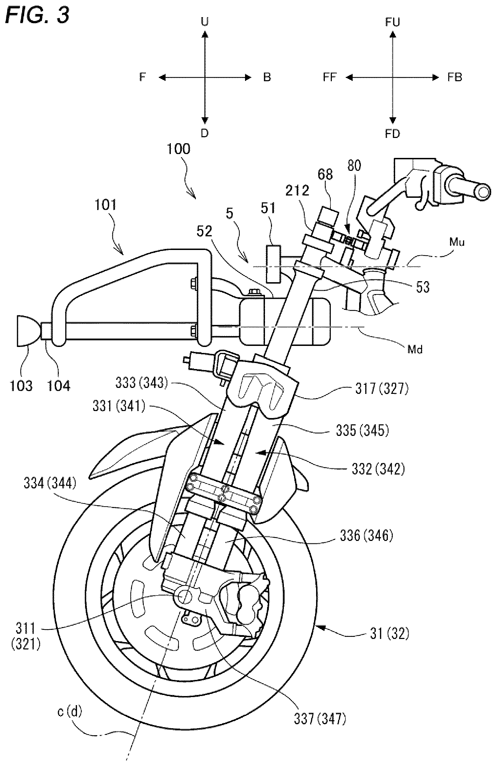

Fig. 3 is a side view showing the left shock absorber 33 and the left front wheel 31. Since the right shock absorber 34 preferably has a structure symmetrical with the left shock absorber 33, the reference numbers showing the elements of the right shock absorber 34 are also added in Fig 3.

As shown in Fig. 3, the left shock absorber 33 is preferably a so-called telescopic shock absorber. The left shock absorber 33 includes a left front telescopic element 331, a left rear telescopic element 332, and a left inner connector 337.

The left front telescopic element 331 includes a left front outer tube 333 and a left front inner tube 334. A lower portion of the left front inner tube 334 is connected to a left inner connector 337. An upper portion of the left front inner tube 334 is inserted into the left front outer tube 333. An upper portion of the left front outer tube 333 is connected to the left bracket 317. The left front inner tube 334 is displaced relative to the left front outer tube 333 along a left extension and contraction axis c which extends in the up-and-down direction of the body frame 21. The left front telescopic element 331 is able to extend and contract in the direction of the left extension and contraction axis c as a result of the left front inner tube 334 being displaced relative to the left front outer tube 333 along the left extension and contraction axis c.

At least a portion of the left rear telescopic element 332 is provided behind the left front telescopic element 331. The left rear telescopic element 332 includes a left rear outer tube 335 and a left rear inner tube 336. The left rear outer tube 335 and the left front outer tube 333 are connected together so as not to move relative to each other.

A lower portion of the left rear inner tube 336 is connected to a left inner connector 337. An upper portion of the left rear inner tube 336 is inserted into the left rear outer tube 335. An upper portion of the left rear outer tube 335 is connected to the left bracket 317.

The left rear inner tube 336 is displaced relative to the left rear outer tube 335 along the left extension and contraction axis c which extends in the up-and-down direction of the body frame 21. The left rear telescopic element 332 is able to extend and contract in the direction of the left extension and contraction axis c as a result of the left rear inner tube 336 being displaced relative to the left rear outer tube 335 along the left extension and contraction axis c.

The left inner connector 337 rotatably supports a left axle 311 of the left front wheel 31. The left inner connector 337 connects a lower portion of the left front inner tube 334 and a lower portion of the left rear inner tube 336 together.

The left shock absorber 33 attenuates or absorbs a displacement of the left front wheel 31 relative to the left front outer tube 333 and the left rear outer tube 335 along the left extension and contraction axis c by an extending or contracting action of the left front telescopic element 331 and an extending or contracting action of the left rear telescopic element 332.

As shown in Fig. 3, the right shock absorber 34 is preferably a so-called telescopic shock absorber. The right shock absorber 34 includes a right front telescopic element 341, a right rear telescopic element 342, and a right inner connector 347.

The right front telescopic element 341 includes a right front outer tube 343 and a right front inner tube 344. A lower portion of the right front inner tube 344 is connected to a right inner connector 347. An upper portion of the right front inner tube 344 is inserted into a right front outer tube 343. An upper portion of the right front outer tube 343 is connected to the right bracket 327. With respect to the right front outer tube 343, the right inner tube 344 displaces along a right extension and contraction axis d which extends in the up-and-down direction of the vehicle body frame 21. The right front telescopic element 341 is able to extend and contract in the direction of the right extension and contraction axis d as a result of the right front inner tube 344 being displaced relative to the right front outer tube 343 along the right extension and contraction axis d.

At least a portion of the right rear telescopic element 342 is provided behind the right front telescopic element 341. The right rear telescopic element 342 includes a right rear outer tube 345 and a right rear inner tube 346. The right rear outer tube 345 and the right front outer tube 343 are connected together so as not to move relative to each other.

A lower portion of the right rear inner tube 346 is connected to a rear inner connector 347. An upper portion of the right rear inner tube 346 is inserted to the right rear outer tube 345. An upper portion of the right rear outer tube 345 is connected to the right bracket 327.

With respect to the right rear outer tube 345, the right rear inner tube 346 is displaced along the right extension and contraction axis d which extends in the up-and-down direction of the vehicle body frame 21. The right rear telescopic element 342 is able to extend and contract in the direction of the right extension and contraction axis d as a result of the right rear inner tube 346 being displaced relative to the right rear outer tube 345 along the right extension and contraction axis d.

The right inner connector 347 rotatably supports a right axle 321 of the right front wheel 32. The right inner connector 347 connects a lower portion of the right front inner tube 344 and a lower portion of the right rear inner tube 346 together.

The right shock absorber 34 attenuates or absorbs the displacement of the right front wheel 32 relative to the right front outer tube 343 and the right rear outer tube 345 along the right extension and contraction axis d by an extending or contracting action of the right front telescopic element 341 and an extending or contracting action of the right rear telescopic element 342.

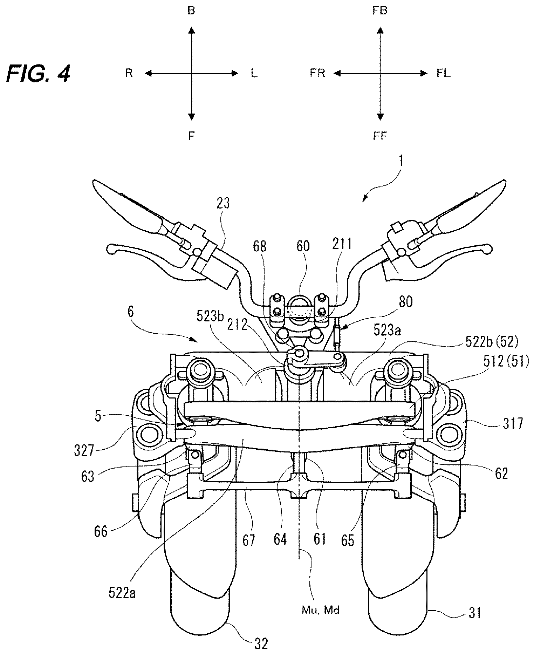

As shown in Fig. 4, the vehicle 1 includes the steering force transmission 6. The steering force transmission 6 includes a handlebar 23 (an example of a steering force input), the upstream side steering shaft 60 (an example of a rear shaft member), a connecting member 80, and a downstream side steering shaft 68 (an example of a front shaft member).

The body frame 21 includes the headpipe 211 that supports the upstream side steering shaft 60 so as to turn and the link support 212 that supports the downstream side steering shaft 68 so as to turn. As shown in Fig. 2, the link support 212 extends in the direction of a middle steering axis Z which extends in the up-and-down direction of the body frame 21. In this preferred embodiment, a turning center (a central steering axis) of the handlebar 23 coincides with a turning center (a rear axis) of the upstream side steering shaft.

A steering force is inputted into the handlebar 23. The upstream side steering shaft 60 is connected to the handlebar 23. The upper portion of the upstream side steering shaft 60 is located behind the lower portion of the upstream side steering shaft 60 in the front-and-rear direction of the vehicle body frame 21. The upstream side steering shaft 60 is supported in the headpipe 211 so as to turn therein.

The connecting member 80 connects the upstream side steering shaft 60 and the downstream side steering shaft 68 together. The connecting member 80 is displaced as the upstream side steering shaft 60 turns. The connecting member 80 transmits the turning motion of the upstream side steering shaft 60 to the downstream side steering shaft 68.

The downstream side steering shaft 68 is supported in the link support 212 so as to turn therein. The downstream side steering shaft 68 is connected to the connecting member 80. The downstream side steering shaft 68 is provided ahead of the upstream side steering shaft 60 in the front-and-rear direction of the body frame 21. The downstream side steering shaft 68 turns in accordance with the displacement of the connecting member 80. As a result of the downstream side steering shaft 68 turning, the left front wheel 31 and the right front wheel 32 are steered or turned via a tie-rod 67.

The steering force transmission 6 transmits a steering force exerted on a handlebar 23 by the rider when operating the handlebar 23 to the left bracket 317 and the right bracket 327. A specific structure will be described in detail below.

In the vehicle 1 according to this preferred embodiment, the linkage 5 preferably uses a four parallel joint link system (also referred to as a parallelogram link).

As shown in Fig. 2, the linkage 5 is disposed above the left front wheel 31 and the right front wheel 32. The linkage 5 includes an upper cross member 51, a lower cross member 52, a left side member 53, and a right side member 54. The linkage 5 is turnably supported on the link support 212 which extends to the middle steering axis Z. Even though the upstream side steering shaft 60 is turned as a result of the operation of the handlebar 23, the linkage 5 is prevented from following the turning motion of the upstream side steering shaft 60 and hence does not turn.

The upper cross member 51 includes a plate member 512. The plate member 512 is provided ahead of the link support 212. The plate member 512 extends in a left-and-right direction of the body frame 21.

A middle portion of the upper cross member 51 is connected to the link support 212 by a connecting portion C. The upper cross member 51 is able to turn relative to the link support 212 about a middle upper axis Mu that passes through the connecting portion C to extend in the front-and-rear direction of the body frame 21.

A left end portion of the upper cross member 51 is connected to the left side member 53 by a connecting portion A. The upper cross member 51 is able to turn relative to the left side member 53 about a left upper axis which passes through the connecting portion A to extend in the front-and-rear direction of the body frame 21.

A right end portion of the upper cross member 51 is connected to the right side member 54 by a connecting portion E. The upper cross member 51 is able to turn relative to the right side member 54 about a right upper axis that passes through the connecting portion E to extend in the front-and-rear direction of the body frame 21.

Fig. 4 is a plan view of the front portion of the vehicle 1 as seen from above the body frame 21. In Fig. 4, the vehicle 1 is standing in the upright state. The following description which will be provided with reference to Fig. 4 is based on the premise that the vehicle 1 is standing in the upright state.

As shown in Fig. 4, the lower cross member 52 includes a lower front cross element 522a and a lower rear cross element 522b. The lower front cross element 522a is provided ahead of the link support 212. The lower rear cross element 522b is provided behind the link support 212. The lower front cross element 522a and the lower rear cross member 522b extend in the left-and-right direction of the body frame 21. The lower front cross element 522a and the lower rear cross member 522b are connected together by a left connecting block 523a and a right connecting block 532b. The left connecting block 523a is disposed on the left of the link support 212. The right connecting block 523b is disposed on the right of the link support 212.

Returning to Fig. 2, the lower cross member 52 is disposed below the upper cross member 51. The lower cross member 52 extends parallel to the upper cross member 51. A middle portion of the lower cross member 52 is connected to the link support 212 by a connecting portion I. The lower cross member 52 is able to turn about a middle down or lower axis Md that passes through the connecting portion I to extend in the front-and-rear direction of the body frame 21.

A left end portion of the lower cross member 52 is connected to the left side member 53 by a connecting portion G. The lower cross member 52 is able to turn about a left lower axis which passes through the connecting portion G to extend in the front-and-rear direction of the body frame 21.

A right end portion of the lower cross member 52 is connected to the right side member 54 by a connecting portion H. The lower cross member 52 is able to turn about a right lower axis which passes through the connecting portion H to extend in the front-and-rear direction of the body frame 21. A length of the upper cross member 51 from the connecting portion E to the connecting portion A is equal or substantially equal to a length of the lower cross member from the connecting portion H to the connecting portion G.

The middle upper axis Mu, the right upper axis, the left upper axis, the middle lower axis Md, the right lower axis, and the left lower axis extend parallel to one another. The middle upper axis Mu, the right upper axis, the left upper axis, the middle lower axis Md, the right lower axis, and the left lower axis are disposed above the left front wheel 31 and the right front wheel 32.

As shown in Figs. 2 and 4, the left side member 53 is disposed on the left of the link support 212. The left side member 53 is disposed above the left front wheel 31. The left side member 53 extends parallel to the middle steering axis Z of the link support 212. An upper portion of the left side member 53 is disposed behind a lower portion thereof.

A lower portion of the left side member 53 is connected to the left bracket 317. The left bracket 317 is able to turn about a left steering axis X relative to the left side member 53. The left steering axis X extends parallel to the middle steering axis Z of the link support 212.

As shown in Figs. 2 and 4, the right side member 54 is disposed on the right of the link support 212. The right side member 54 is disposed above the right front wheel 32. The right side member 54 extends parallel to the middle steering axis Z of the link support 212. An upper portion of the right side member 54 is disposed behind a lower portion thereof.

A lower portion of the right side member 54 is connected to the right bracket 327. The right bracket 327 is able to turn about a right steering axis Y relative to the right side member 54. The right steering axis Y extends parallel to the middle steering axis Z of the link support 212.

Thus, as has been described above, the upper cross member 51, the lower cross member 52, the left side member 53, and the right side member 54 are supported by the link support 212 so that the upper cross member 51 and the lower cross member 52 are held in postures which are parallel to each other and so that the left side member 53 and the right side member 54 are held in postures which are parallel to each other.

As shown in Figs. 2 and 4, the steering force transmission 6 includes a middle transmission plate 61, a left transmission plate 62, a right transmission plate 63, a middle joint 64, a left joint 65, a right joint 66, and the tie-rod 67.

The middle transmission plate 61 is connected to a lower portion of the downstream side steering shaft 68. The middle transmission plate 61 cannot turn relative to the downstream side steering shaft 68. The middle transmission plate 61 is able to turn about the middle steering axis Z relative to the link support 212.

The left transmission plate 62 is disposed on the left of the middle transmission plate 61. The left transmission plate 62 is connected to the left bracket 317. The left transmission plate 62 cannot turn relative to the left bracket 317. The left transmission plate 62 is able to turn about the left steering axis X relative to the left side member 53.

The right transmission plate 63 is disposed on the right of the middle transmission plate 61. The right transmission plate 63 is connected to the right bracket 327. The right transmission plate 63 cannot turn relative to the right bracket 327. The right transmission plate 63 is able to turn about the right steering axis Y relative to the right side member 54.

As shown in Fig. 4, the middle joint 64 is connected to a front portion of the middle transmission plate 61 via a shaft portion that extends in the up-and-down direction of the body frame 21. The middle transmission plate 61 and the middle joint 64 are able to turn relative to each other about this shaft portion.

The left joint 65 is disposed directly on the left of the middle joint 64. The left joint 65 is connected to a front portion of the left transmission plate 62 via a shaft that extends in the up-and-down direction of the body frame 21. The left transmission plate 62 and the left joint 65 are able to turn relative to each other about this shaft portion.

The right joint 66 is disposed directly on the right of middle joint 64. The right joint 66 is connected to a front portion of the right transmission plate 63 via a shaft that extends in the up-and-down direction of the body frame 21. The right transmission plate 63 and the right joint 66 are able to turn relative to each other about this shaft portion.

A shaft portion that extends in the front-and-rear direction of the body frame 21 is provided at a front portion of the middle joint 64. A shaft portion that extends in the front-and-rear direction of the body frame 21 is provided at a front portion of the left joint 65. A shaft portion that extends in the front-and-rear direction of the body frame 21 is provided at a front portion of the right joint 66.

The tie-rod 67 extends in the left-and-right direction of the body frame 21. The tie-rod 67 is connected to the middle joint 64, the left joint 65, and the right joint 66 via those shaft portions. The tie rod 67 and the intermediate joint 64 are able to turn relatively about the shaft portion which is provided at the front portion of the intermediate joint 64. The tie-rod 67 and the left joint 65 are able to turn relative to each other about the shaft portion that is provided at the front portion of the left joint 65. The tie rod 67 and the right joint 66 are able to turn relative to each other about the shaft portion that is provided at the front portion of the right joint 66.

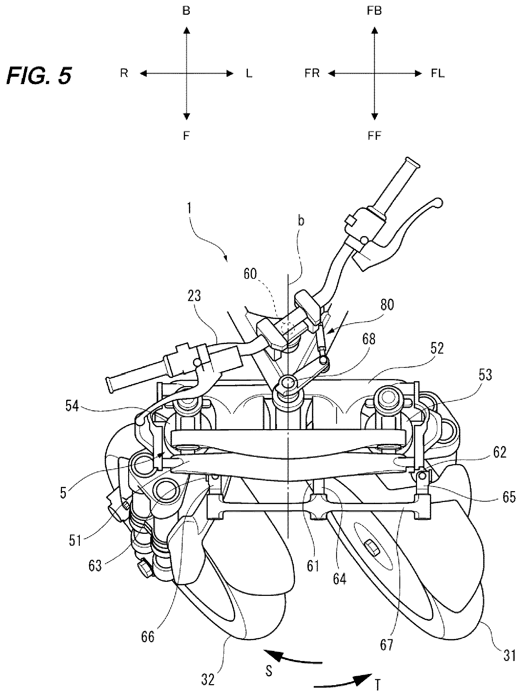

Next, referring to Figs. 4 and 5, a steering operation of the vehicle 1 will be described. Fig. 5 is a plan view, as seen from above the body frame 21, of the front portion of the vehicle 1 with the left front wheel 31 and the right front wheel 32 turned or steered to the left.

When the rider operates the handlebar 23, the upstream side steering shaft 60 turns. The turning motion of the upstream side steering shaft 60 is transmitted to the downstream side steering shaft 68 via the connecting member 80. The downstream side steering shaft 68 turns relative to the link support 212 about a front steering axis b. In the case of the left front wheel 31 and the right front wheel 32 being turned to the left as shown in Fig. 5, as the handlebar 23 is operated, the middle transmission plate 61 turns relative to the link support 212 in a direction indicated by an arrow T about the front steering axis b.

In association with the turning of the middle transmission plate 61 in the direction indicated by the arrow T, the middle joint 64 of the tie-rod 67 turns relative to the middle transmission plate 61 in a direction indicated by an arrow S. This moves the tie-rod 67 leftward and rearward with its posture kept unchanged.

As the tie-rod 67 moves leftward and rearward, the left joint 65 and the right joint 66 of the tie-rod 67 turn in the direction indicated by the arrow S relative to the left transmission plate 62 and the right transmission plate 63, respectively. This causes the left transmission plate 62 and the right transmission plate 63 to turn in the direction indicated by the arrow T with the tie rod 67 maintaining its posture unchanged.

When the left transmission plate 62 turns in the direction indicated by the arrow T, the left bracket 317, which cannot turn relative to the left transmission plate 62, turns in the direction indicated by the arrow T about the left steering axis X relative to the left side member 53.

When the right transmission plate 63 turns in the direction indicated by the arrow T, the right bracket 327, which cannot turn relative to the right transmission plate 63, turns in the direction indicated by the arrow T about the right steering axis Y relative to the right side member 54.

When the left bracket 317 turns in the direction indicated by the arrow T, the left shock absorber 33, which is connected to the left bracket 317 via the left front outer tube 333 and the left rear outer tube 335, turns in the direction indicated by the arrow T about the left steering axis X relative to the left side member 53. When the left shock absorber 33 turns in the direction indicated by the arrow T, the left front wheel 31, which is supported on the left shock absorber 33, turns in the direction indicated by the arrow T about the left steering axis X relative to the left side member 53.

When the right bracket 327 turns in the direction indicated by the arrow T, the right shock absorber 34, which is connected to the right bracket 327 via the right front outer tube 343 and the right rear outer tube 345, turns in the direction indicated by the arrow T about the right steering axis Y relative to the right side member 54. When the right shock absorber 34 turns in the direction indicated by the arrow T, the right front wheel 32, which is supported on the right shock absorber 34, turns in the direction indicated by the arrow T about the right steering axis Y relative to the right side member 54.

When the rider operates the handlebar 23 so as to turn the left front wheel 31 and the right front wheel 32 to the right, the elements described above turn in the direction indicated by the arrow S. Since the elements move the other way around in relation to the left-and-right direction, detailed description thereof will be omitted here.

Thus, as has been described above, as the rider operates the handlebar 23, the steering force transmission 6 transmits the steering force accordingly to the left front wheel 31 and the right front wheel 32. The left front wheel 31 and the right front wheel 32 turn about the left steering axis X and the right steering axis Y, respectively, in the direction corresponding to the direction in which the handlebar 23 is operated by the rider.

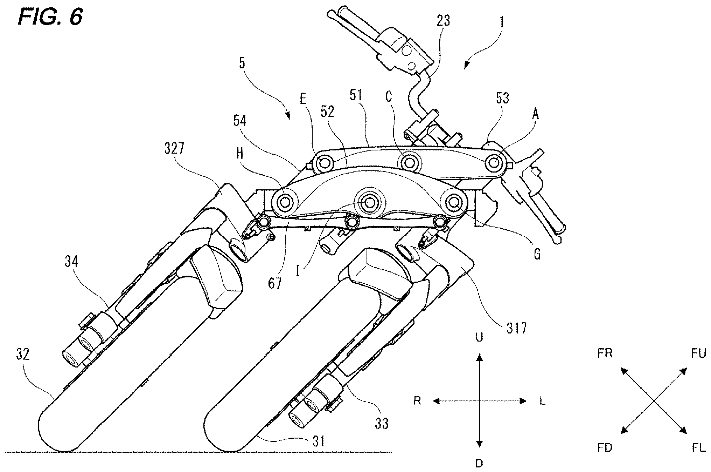

Next, a leaning operation of the vehicle 1 will be described with reference to Figs. 2 and 6. Fig. 6 is a front view of the front portion of the vehicle 1 as viewed from the front of the body frame 21, showing a state in which the body frame 21 leans to the left of the vehicle 1.

As shown in Fig. 2, with the vehicle 1 standing in the upright state, when looking at the vehicle 1 from the front of the body frame 21, the linkage 5 has a rectangular or substantially rectangular shape. As shown in Fig. 6, with the vehicle 1 leaning to the left, when looking at the vehicle 1 from the front of the body frame 21, the linkage 5 has a parallelogram shape.

The deformation of the linkage 5 is interlocked with the leaning of the body frame 21 in the left-and-right direction of the vehicle 1. The operation of the linkage 5 means that the upper cross member 51, the lower cross member 52, the left side member 53, and the right side member 54 that define the linkage 5 turn relatively about turning axes which pass through the corresponding connecting portions A, C, E, G, H, I, such that the shape of the linkage 5 changes.

For example, as shown in Fig. 6, when the rider causes the vehicle 1 to lean to the left, the link support 212 leans to the left relative to the vertical direction. When the link support 212 leans, the upper cross member 51 turns counterclockwise as seen from the front of the vehicle 1 about the middle upper axis Mu that passes through the connecting portion C relative to the link support 212. Similarly, the lower cross member 52 turns counterclockwise as seen from the front of the vehicle 1 about the middle lower axis Md that passes through the connecting portion I relative to the link support 212. This causes the upper cross member 51 to move to the left relative to the lower cross member 52.

As the upper cross member 51 moves to the left, the upper cross member 51 turns counterclockwise as seen from the front of the vehicle 1 about the left upper axis that passes through the connecting portion A and the right upper axis that passes through the connecting portion E relative to the left side member 53 and the right side member 54, respectively. Similarly, the lower cross member 52 turns counterclockwise as seen from the front of the vehicle 1 about the left lower axis that passes through the connecting portion G and the right lower axis that passes through the connecting portion H relative to the left side member 53 and the right side member 54, respectively. This causes the left side member 53 and the right side member 54 to lean to the left relative to the vertical direction with their postures kept parallel to the link support 212.

As this occurs, the lower cross member 52 moves to the left relative to the tie-rod 67. As the lower cross member 52 moves to the left, the shaft portions that are provided at the respective front portions of the middle joint 64, the left joint 65, and the right joint 66 turn relative to the-tie rod 67. This allows the tie-rod 67 to hold a parallel posture to the upper cross member 51 and the lower cross member 52.

As the left side member 53 leans to the left, the left bracket 317, which is connected to the left side member 53, leans to the left. As the left bracket 317 leans to the left, the left shock absorber 33, which is connected to the left bracket 317, leans to the left. As the left shock absorber 33 leans to the left, the left front wheel 31, which is supported on the left shock absorber 33, leans to the left with its posture kept parallel to the link support 212.

As the right side member 54 leans to the left, the right bracket 327, which is connected to the right side member 54, leans to the left. As the right bracket 327 leans to the left, the right shock absorber 34, which is connected to the right bracket 327, leans to the left. As the right shock absorber 34 leans to the left, the right front wheel 32, which is supported on the right shock absorber 34, leans to the left with its posture kept parallel to the link support 212.

The leaning operations of the left front wheel 31 and the right front wheel 32 are described based on the vertical direction. However, when the vehicle 1 leans (when the linkage 5 is activated to operate), the up-and-down direction of the body frame 21 does not coincide with the vertical up-and-down direction. In a case in which the leaning operations are described based on the up-and-down direction of the body frame 21, when the linkage 5 is activated to operate, the relative positions of the left front wheel 31 and the right front wheel 32 to the body frame 21 change. In other words, the linkage 5 changes the relative positions of the left front wheel 31 and the right front wheel 32 to the body frame 21 in the up-and-down direction of the body frame 21 to cause the body frame 21 to lean relative to the vertical direction.

When the rider causes the vehicle 1 to lean to the right, the elements lean to the right. Since the elements move the other way around in relation to the left-and-right direction, detailed description thereof will be omitted here.

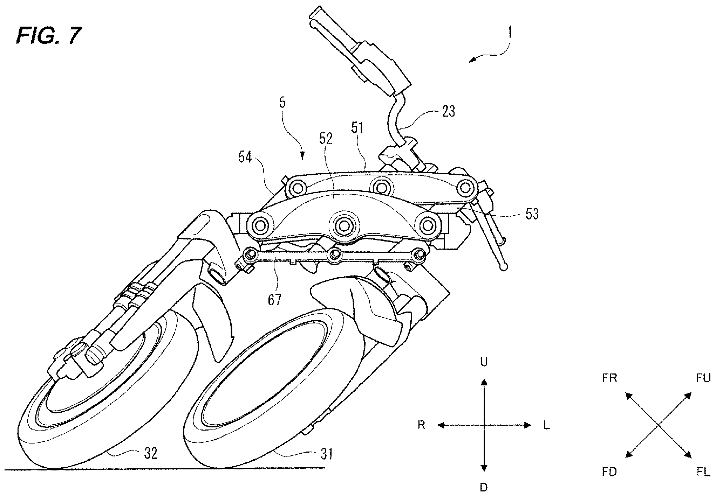

Fig. 7 is a front view of the front portion of the vehicle with the vehicle 1 leaning and steered. Fig. 7 shows a state in which the vehicle 1 is steered to the left while leaning to the left. The steering operation turns the left front wheel 31 and the right front wheel 32 to the left, and the leaning operation causes the left front wheel 31 and the right front wheel 32 to lean to the left together with the body frame 21. More specifically, in this state, the linkage 5 exhibits the parallelogram shape, and the tie-rod 67 moves towards the left and rear of the body frame 21 from its position that the tie-rod 67 takes when the body frame 21 stays in the upright state.

As described above, the straddle-type vehicle 1 according to the present embodiment includes:
the body frame 21,
the right front wheel 32 and the left front wheel 31 that are steerable and are disposed on the left and right when viewed from the front of the vehicle,
the linkage 5 that is connected to the right front wheel 32 and the left front wheel 31 and changes a relative position of the right front wheel 32 and the left front wheel 31,
the right shock absorber 34 that supports the right front wheel 32 at a lower portion thereof and absorbs a relative displacement of the right front wheel 32 with respect to the linkage 5,
the left shock absorber 33 that supports the left front wheel 31 at a lower portion thereof and absorbs a relative displacement of the left front wheel 31 with respect to the linkage 5, and
the power unit support 251 that supports the power unit 25 on the body frame 21.

The linkage includes:
the right side member 54 that supports an upper portion of the right shock absorber 34 so as to be able to turn about the right steering axis Y extending in the up-and-down direction of the body frame 21,
the left side member 53 that supports an upper portion of the left shock absorber 33 so as to be able to turn about the left steering axis X located parallel to the right steering axis Y,
the upper cross member 51 that supports an upper portion of the right side member 54 at a right end portion of the upper cross member 51 so as to be able to turn about an upper right leaning axis extending in the front-and-rear direction of the body frame 21, and supports an upper portion of the left side member 53 at a left end portion of the upper cross member 51 so as to be able to turn about an upper left leaning axis located parallel to the upper right leaning axis, and
the lower cross member 52 that supports a lower portion of the right side member 54 at a right end portion of the lower cross member 52 so as to be able to turn about a lower right leaning axis located parallel to the upper right leaning axis, and supports a lower portion of the left side member 53 at a left end portion of the lower cross member 52 so as to be able to turn about a lower left leaning axis located parallel to the upper left leaning axis.

The upper cross member 51 and the lower cross member 52 are connected to the body frame 21 so as to be able to rotate about respective rotation axes thereof.

Further, in the straddle-type vehicle 1 according to the present embodiment,
a carrier 100 disposed ahead of the linkage 5 is provided, the carrier 100 is supported on the lower cross member 52 via a plurality of carrier supports 102, and at least two carrier supports 102 are provided at positions shifted in the up-and-down direction when viewed from the side of the vehicle.

According to the above configuration, since the carrier supports 102 are fixed to the lower cross member 52 at positions shifted in the up-and-down direction, a load applied to the carrier supports 102 can be dispersed, and the carrier 100 can be stably attached. The configuration will be described in detail below.

### <Details of Carrier 100>

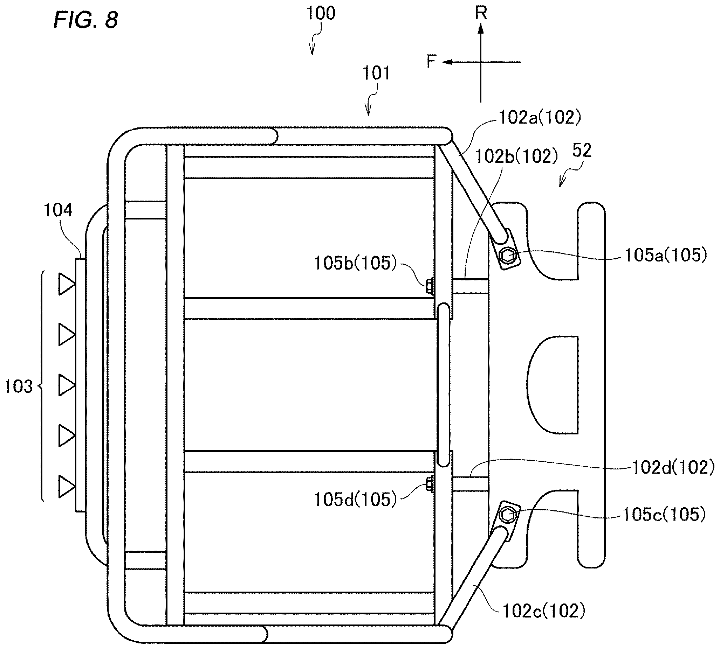

The configuration of the carrier 100 will be described with reference to Figs. 8 to 11.

As shown in Fig. 8, the carrier 100 is located ahead of the body frame 21, that is, ahead of the linkage 5. The carrier 100 is, for example, a basket on which a package is loaded. The carrier 100 is fixed to the linkage 5.

The carrier 100 includes a loading portion 101, the carrier supports 102, and a lamp attachment portion 104 to which a lamp 103 such as a headlamp or a flasher is attached. The package is loaded on the loading portion 101. As shown in Figs. 3 and 8, the carrier supports 102 are fixed to the lower cross member 52 of the linkage 5 to support the loading portion 101. The lamp attachment portion 104 is a portion to which the lamp 103 is attached. It is desirable that the lamp attachment portion 104 is located ahead of the carrier 100 so that the lamp 103 can illuminate the front even when a package is loaded.

The carrier support 102 is formed of a pipe-like metal member. The carrier support 102 is a member extending in the front-and-rear direction. An end portion of the carrier support 102 in a longitudinal direction is configured to be fastened to the lower cross member 52.

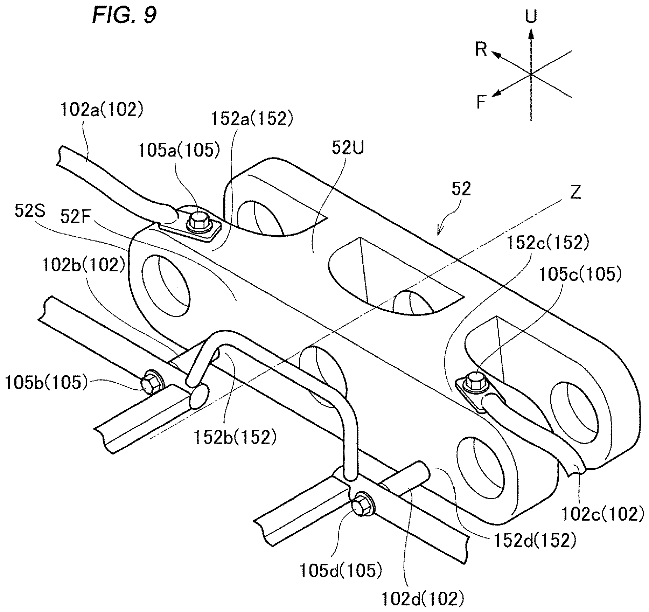

In the example shown in Fig. 9, the carrier 100 includes a first carrier support 102a provided in an upper right region of a rear portion of the loading portion 101, a second carrier support 102b provided in a lower right region of the rear portion of the loading portion 101, a third carrier support 102c provided in an upper left region of the rear portion of the loading portion 101, and a fourth carrier support 102d provided in a lower left region of the rear portion of the loading portion 101. The first carrier support 102a extends obliquely rearward to the right from the upper left region of the rear portion of the loading portion 101. The second carrier support 102b extends rearward from the lower left region of the rear portion of the loading portion 101. The third carrier support 102c extends obliquely rearward to the left from the upper right region of the rear portion of the loading portion 101. The fourth carrier support 102d extends rearward from the lower right region of the rear portion of the loading portion 101.

As shown in Fig. 9, the lower cross member 52 includes a plurality of fixing portions 152 to which the respective carrier supports 102 are fixed. The carrier support 102 is fixed to the fixing portion 152 of the lower cross member 52 by a bolt 105.

The carrier support 102 and the lower cross member 52 may be fixed to each other by a method other than fastening, such as welding, adhesion, or fitting, in addition to fastening with a bolt or a screw.

In the present embodiment, four fixing portions 152 are provided, and when the lower cross member is virtually divided into a right region and a left region with reference to a body center line Z as viewed from the front of the vehicle, a first fixing portion 152a is provided at an upper portion of the left region of the lower cross member 52, a second fixing portion 152b is provided at a front portion of the left region of the lower cross member 52, a third fixing portion 152c is provided at an upper portion of the right region of the lower cross member 52, and a fourth fixing portion 152d is provided at a front portion of the right region of the lower cross member 52.

The first fixing portion 152a is provided in a left region of a lower cross member upper surface 52U. The first fixing portion 152a is a screw hole opened upward. A first bolt 105a penetrating the first carrier support 102a is screwed into the first fixing portion 152a from above.

The second fixing portion 152b is provided in a left region of a lower cross member front surface 52F. The second fixing portion 152b is a screw hole opened forward. A second bolt 105b penetrating the inside of the second carrier support 102b having a pipe shape is screwed into the second fixing portion 152b from the front.

The third fixing portion 152c is provided in a right region of the lower cross member upper surface 52U. The third fixing portion 152c is a screw hole opened upward. A third bolt 105c penetrating the third carrier support 102c is screwed into the third fixing portion 152c from above.

The fourth fixing portion 152d is provided in a right region of the lower cross member front surface 52F. The fourth fixing portion 152d is a screw hole opened forward. A fourth bolt 105d penetrating the inside of the fourth carrier support 102d having a pipe shape is screwed into the fourth fixing portion 152d from the front.

The lower cross member upper surface 52U herein refers to a surface seen when the lower cross member 52 is viewed from above the vehicle. The lower cross member front surface 52F refers to a surface seen when the lower cross member 52 is viewed from the front of the vehicle. The upper surface and the front surface of the lower cross member 52 may be defined according to such a definition even in a case where a cross section of the lower cross member 52 taken in a vertical direction and the front-and-rear direction has a circular shape or the like.

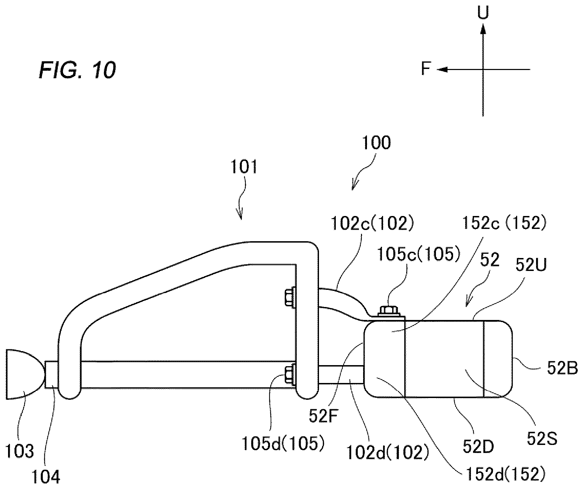

As shown in Fig. 10, in the present embodiment, the carrier 100 is supported on the lower cross member 52 by the plurality of carrier supports 102, and at least two carrier supports 102 are provided at positions shifted in the up-and-down direction when viewed from the side of the vehicle. The phrase "at least two carrier supports 102 are provided at positions shifted in the up-and-down direction when viewed from the side of the vehicle" includes a case where most of the two carrier supports 102 overlaps with each other in the up-and-down direction when viewed from the side of the vehicle, a case where at least a portion of the two carrier supports 102 overlaps with each other, and a case where the two carrier supports 102 are separated without overlapping with each other. For example, even when most of the carrier support 102 located on the right side is covered by the carrier support 102 located on the left side in a case where the vehicle in a non-steering upright state is viewed from a left side in the horizontal direction, if a part of the carrier support 102 located on the right side is seen above or below the carrier support 102 located on the left side, it can be said that "at least two carrier supports 102 are provided at positions shifted in the up-and-down direction when viewed from the side of the vehicle".

Since an engine (power unit 25) is mounted on the straddle-type vehicle 1 of the present disclosure, the vehicle 1 travels on a curve or a rough road at a higher speed than the tricycle disclosed in JP 2021-020595 A. Therefore, it is considered that the vibration applied to the carrier 100 of the straddle-type vehicle 1 when traveling on the same road is larger than that of a general tricycle. Therefore, when the vehicle is traveling on a rough road or leans, the influence of the force or moment applied to the carrier support 102 by the vibration of the carrier 100 is larger than that of a typical tricycle. Based on the above background, it is considered to reduce the deflection of the carrier support 102 caused by the force or moment applied to the carrier support 102.

In order to implement the above-described object, a person skilled in the art may increase the rigidity by increasing the thickness of the members constituting the carrier 100 and the carrier support 102. However, since the carrier 100 is increased in size by increasing the thickness of the member, it is necessary to further improve the rigidity of the fixing portion 152 that fixes the carrier support 102.

However, in order to increase the rigidity of the fixing portion 152, it is necessary to increase the size of the peripheral structure of the fixing portion 152. In a case where the peripheral structure of the fixing portion 152 is increased in size, the fixing portion and the carrier support interfere with separate members when the vehicle leans, and the linkage 5 is increased in size to avoid the interference.

According to the straddle-type vehicle 1 of the present disclosure, two carrier supports 102 are provided to support the carrier 100, thereby dispersing and reducing the force acting on each of the carrier supports 102. Further, the two carrier supports 102 are provided in the up-and-down direction, thereby increasing the rigidity of the carrier supports 102 with respect to the force acting on the carrier 100 in the up-and-down direction.

It is considered that in a configuration in which the carrier 100 is supported at two positions in the up-and-down direction, the force acting on the carrier support 102 may be reduced by fixing the carrier support 102 to the upper cross member 51 in addition to the lower cross member 52. However, in the straddle-type vehicle 1 according to the present disclosure on which the power unit 25 is mounted, a region ahead of the upper cross portion 51 is likely to interfere with a hydraulic device of a brake, other members, and the like. Therefore, a structure in which the carrier support 102 is fixed to the lower cross member 52 and the upper cross member 51 tends to increase the linkage 5 and the vehicle in size for avoiding the above-described interference.

Since a weight is small and a load acting on the lower cross member 52 is small in the vehicle described in JP 2021-020595 A, a dimension of the lower cross member 52 in the up-and-down direction is also small, and thus it is difficult to attach the two carrier supports 102. However, it has been considered on the fact that the lower cross member 52 is large enough to attach the two carrier supports 102 in the straddle-type vehicle 1 according to the present embodiment on which an engine is mounted.

Therefore, it has been considered the provision of two carrier supports 102 that support the carrier 100 at positions shifted in the up-and-down direction with respect to the lower cross member 52 in a straddle-type vehicle on which an engine is mounted. Accordingly, the carrier support 102 does not interfere with other members.

Since it is possible to prevent an increase in size of the fixing portion 152, it is possible to provide a configuration in which the fixing portion 152 does not interfere with other members regardless of whether the vehicle is in the upright state or the lean state.

Therefore, according to the above configuration, the straddle-type vehicle 1 having high support rigidity for a carrier while preventing an increase in size of the vehicle is provided.

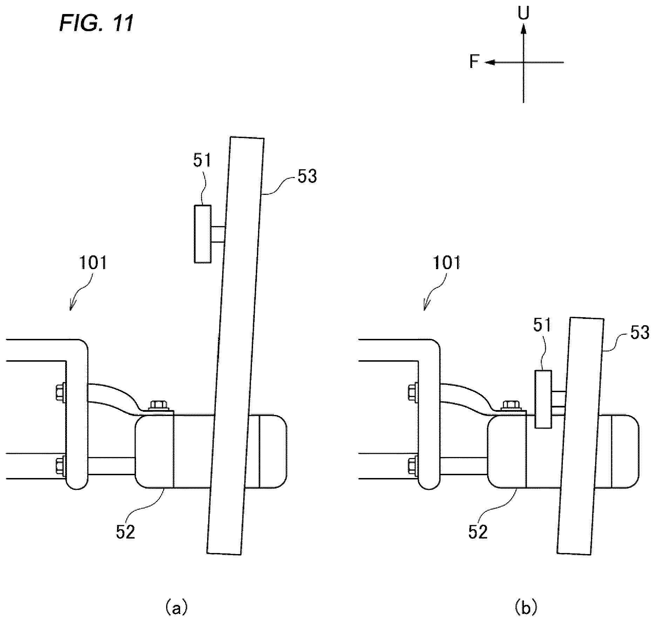

Next, with reference to Fig. 11, a positional relationship between the upper cross member 51 and the lower cross member 52 will be described separately between an upright state in which the vehicle is not leaning and a lean state in which the vehicle leans. (a) in Fig. 11 is a side view showing the upper cross member 51, the lower cross member 52, and the left side member 53 in the upright state of the vehicle. (b) in Fig. 11 is a side view showing the upper cross member 51, the lower cross member 52, and the left side member 53 when the vehicle leans to the left and is in the lean state.

As shown in (a) in Fig. 11, when the straddle-type vehicle 1 according to the present embodiment does not turn, at least one of the fixing portions 152 provided on the lower cross member 52 is located ahead of the front end of the upper cross member 51. Since when the straddle-type vehicle 1 according to the present embodiment is in the upright state, the fixing portion 152 provided on the lower cross member 52 is located ahead of the front end portion of the upper cross member 51, the upper cross member 51 and the fixing portion 152 provided on the lower cross member 52 do not interfere with each other.

As shown in (b) in Fig. 11, when the vehicle shifts from the upright state to the lean state, the linkage 5 deforms, the left side member 53 moves to the left, and the upper cross member 51 moves to the left while maintaining a state parallel to the lower cross member 52. Accordingly, a distance between the upper cross member 51 and the lower cross member 52 is reduced, and when the vehicle leans to the maximum limit, a portion of the upper cross member 51 may overlap with the lower cross member 52 in the front-and-rear direction of the vehicle. Since when the straddle-type vehicle 1 according to the present embodiment turns, the fixing portion 152 provided on the lower cross member 52 is located ahead of the front end portion of the upper cross member 51, the fixing portions 152 provided on the upper cross member 51 and the lower cross member 52 do not interfere with each other even when the upper cross member 51 and the lower cross member 52 are adjacent to each other.

As described above, even when the vehicle is in the lean state, the upper cross member 51 and the lower cross member 52 of the linkage 5 maintains a state of being parallel to the road surface. According to the straddle-type vehicle 1 of the present embodiment, since the carrier 100 is fixed to the lower cross member 52 of the linkage 5 by the carrier support 102, the carrier 100 can be maintained in a state of being parallel to the road surface similarly to the lower cross member 52.

Accordingly, when the vehicle leans to the left or right, the package loaded on the carrier 100 can be prevented from leaning. Accordingly, the loading performance of the carrier 100 can be improved.

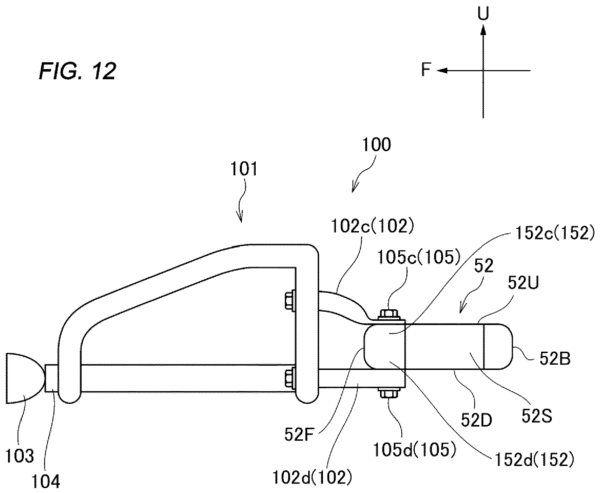

The position of the fixing portion 152 in the present embodiment is not limited to the embodiment described above. For example, as shown in Fig. 12, when the lower cross member 52 is virtually divided into a right region and a left region with reference to the body center line Z when the vehicle is viewed from the front, the fixing portions 152a to 152d may be respectively provided in the right region of the lower cross member upper surface 52U, the right region of the lower cross member lower surface 52D, the left region of the lower cross member upper surface 52U, and the left region of the lower cross member lower surface 52D.

The positions and the number of the fixing portions 152 are appropriately determined according to the shape and the like of the carrier 100. It is desirable that at least one fixing portion 152 is provided in each of the right region and the left region.

For an example, as shown in Fig.12, the third carrier support 102c may be extended rearward from the back surface of the carrier 101 and the third carrier support 102c may be fixed on the third fixing portion 152c which is provided in the left region of the lower cross member upper surface 52U. The fourth carrier support 102d may be extended rearward from the back surface of the carrier 101 and the fourth carrier support 102d may be fixed on the fourth fixing portion 152d which is provided in the left region of the lower cross member lower surface 52D.

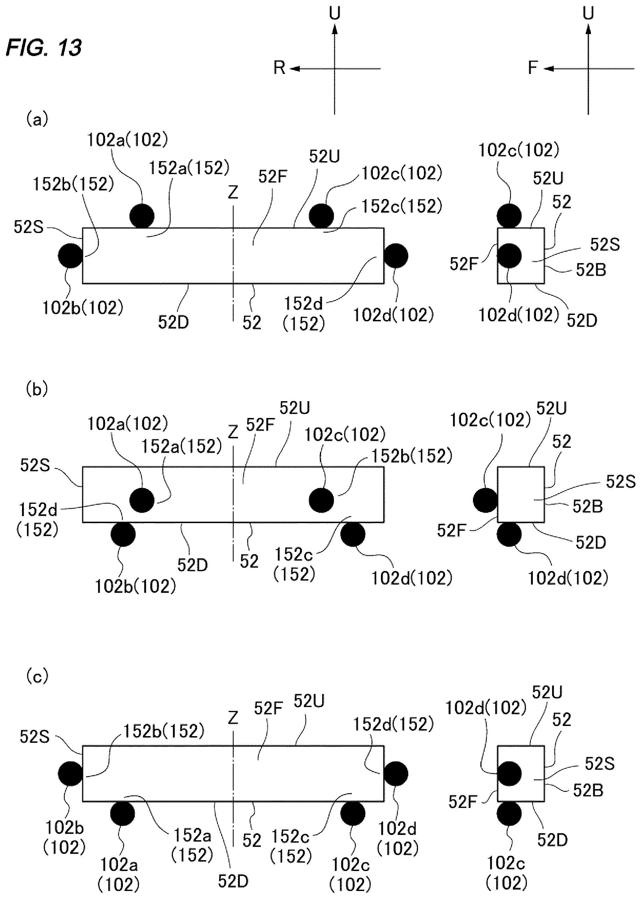

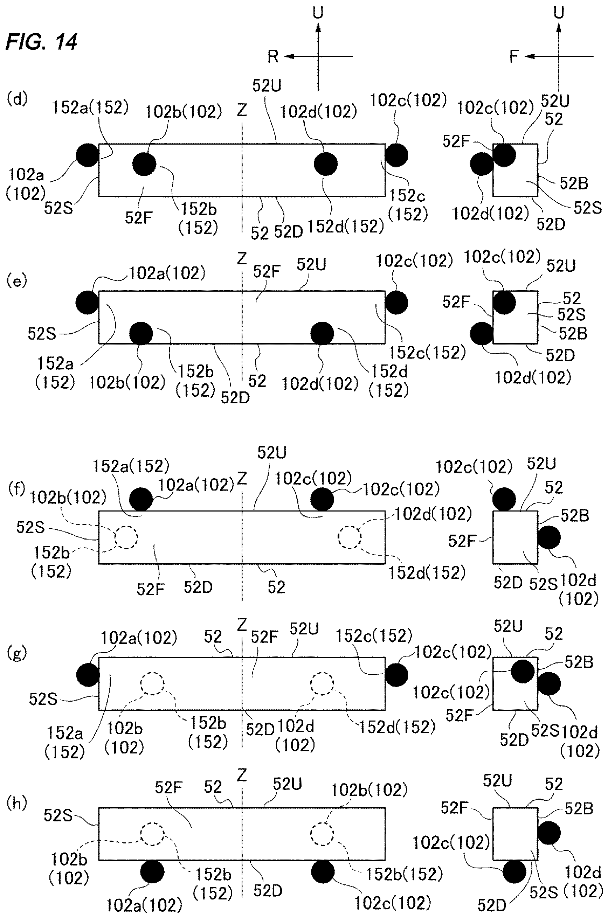

Each of (a) to (c) in Fig. 13 and (d) to (f) in Fig. 14 is a front view (left view) and a side view (right view) of other embodiments showing a state in which carriers are fixed at shifted positions of an upper portion and a lower portion of a lower cross member.

As shown in (a) in Fig. 13, the carrier supports 102 and the fixing portions 152 may be provided on the lower cross member upper surface 52U and the lower cross member side surface 52S. In the embodiment shown in (a) in Fig. 13, at least two carrier supports 102 are provided at positions shifted in the up-and-down direction when viewed from the side of the vehicle, and the fixing portions 152 are provided on at least two surfaces of the upper surface, the lower surface, the side surface, the front surface, and the rear surface when the vehicle is viewed from the front.

As shown in (b) in Fig. 13, the carrier supports 102 and the fixing portions 152 may be provided on the lower cross member lower surface 52D and the lower cross member front surface 52F. In the embodiment shown in (b) in Fig. 13, at least two carrier supports 102 are provided at positions shifted in the up-and-down direction when viewed from the side of the vehicle, and the fixing portions 152 are provided on at least two surfaces of the upper surface, the lower surface, the side surface, the front surface, and the rear surface when the vehicle is viewed from the front.

As shown in (c) in Fig. 13, the carrier supports 102 and the fixing portions 152 may be provided on the lower cross member lower surface 52D and the lower cross member side surface 52S. In the embodiment shown in (c) in Fig. 13, at least two carrier supports 102 are provided at positions shifted in the up-and-down direction when viewed from the side of the vehicle, and the fixing portions 152 are provided on at least two surfaces of the upper surface, the lower surface, the side surface, the front surface, and the rear surface when the vehicle is viewed from the front.

As shown in (d) and (e) in Fig. 14, the carrier supports 102 and the fixing portions 152 may be provided on the lower cross member front surface 52F and the lower cross member side surface 52S. In the embodiments shown (d) and (e) in Fig. 14, at least two carrier supports 102 are provided at positions shifted in the up-and-down direction when viewed from a side of the vehicle, and the fixing portions 152 are provided on at least two surfaces of the upper surface, the lower surface, the side surface, the front surface, and the rear surface when the vehicle is viewed from the front.

As shown in (f), (g), and (h) in Fig. 14, the carrier supports 102 and the fixing portions 152 may be provided on the lower cross member rear surface 52B and the lower cross member side surface 52S.

In the embodiments shown in (f), (g), and (h) in Fig. 14, at least two carrier supports 102 are provided at positions shifted in the up-and-down direction when viewed from a side of the vehicle, and the fixing portions 152 are provided on at least two surfaces of the upper surface, the lower surface, the side surface, the front surface, and the rear surface when the vehicle is viewed from the front.

The lower cross member lower surface 52D herein refers to a surface seen when the lower cross member 52 is viewed from below the vehicle. The lower cross member rear surface 52B refers to a surface seen when the lower cross member 52 is viewed from the rear of the vehicle. The lower cross member side surface 52S refers to a surface seen when the lower cross member 52 is viewed from the side of the vehicle. Even in a case where the cross section of the lower cross member 52 taken in the vertical direction and the front-and-rear direction has a circular shape or the like, the lower surface and the rear surface of the lower cross member 52 can be defined according to such a definition.

According to the straddle-type vehicle 1 of the present embodiment, at least three fixing portions 152 may be provided. Accordingly, since the load applied to the carrier support 102 can be further dispersed, the carrier 100 can be stably attached.

In the above embodiment, the lower cross member 52 is described as having a rectangular cross section, which is quadrangular, extending in the front-and-rear direction and the up-and-down direction, and the cross-sectional shape may be a polygonal shape such as a triangular shape or a five-sided shape, or a circular shape.

Although a vehicle having a so-called outboard suspension structure is exemplified in the above embodiments, the present teaching may be applied to a vehicle having a so-called inboard suspension system.

In the preferred embodiments of the present teaching described above, the vehicle 1 preferably includes the single rear wheel 4. However, a plurality of rear wheels may be provided.

In the preferred embodiments of the present teaching described above, the center of the rear wheel 4 in relation to the left-and-right direction of the body frame 21 coincides with the center of the distance between the left front wheel 31 and the right front wheel 32 in relation to the left-and-right direction of the body frame 21. Although the structure described above is preferable, the center of the rear wheel 4 in relation to the left-and-right direction of the body frame 21 may not coincide with the center of the distance between the left front wheel 31 and the right front wheel 32 in relation to the left-and-right direction of the body frame 21.

### REFERENCE SIGNS LIST

1 vehicle (straddle-type vehicle)
2 vehicle main body
3 front wheel
4 rear wheel
5 linkage
6 steering force transmission
21 body frame
22 body cover
23 handlebar
24 seat
25 power unit
31 left front wheel
32 right front wheel
33 left shock absorber
34 right shock absorber
51 upper cross member
52 lower cross member
52U lower cross member upper surface
52F lower cross member front surface
52D lower cross member lower surface
52B lower cross member rear surface
53 left side member
54 right side member
60 upstream side steering shaft
61 middle transmission plate
62 left transmission plate
63 right transmission plate
64 middle joint
65 left joint
66 right joint
67 tie-rod
68 downstream side steering shaft
80 connecting member
100 carrier
101 loading portion
102, 102a, 102b, 102c, 102d carrier support
103 lamp
104 lamp attachment portion
105, 105a, 105b, 105c, 105d bolt
152, 152a, 152b, 152c, 152d fixing portion
211 headpipe
212 link support
223 front fender
224 rear fender
311 left axle
317 left bracket
321 right axle
327 right bracket
c left extension and contraction axis
d right extension and contraction axis
X left steering axis
Y right steering axis
Z body center line

## Claims

1. A straddle-type vehicle (1), comprising:
a body frame (21);
a right front wheel (32) and a left front wheel (31) that are steerable and are disposed on the left and right with regard to a left-and-right direction of the body frame (21);
a linkage (5) that is connected to the right front wheel (32) and the left front wheel (31) and is configured to change a relative position of the right front wheel (32) and the left front wheel (31);
a right shock absorber (34) that supports the right front wheel (32) at a lower portion thereof with regard to an up-and-down direction of the body frame (21) and is configured to absorb a relative displacement of the right front wheel (32) with respect to the linkage (5);
a left shock absorber (33) that supports the left front wheel (31) at a lower portion thereof with regard to the up-and-down direction of the body frame (21) and is configured to absorb a relative displacement of the left front wheel (31) with respect to the linkage (5);
a power unit support (251) that supports a power unit (25) on the body frame (21),
wherein the linkage (5) includes
a right side member (54) and a left side member (53) disposed on the left and right with regard to the left-and-right direction of the body frame (21),
the right side member (54) supports an upper portion of the right shock absorber (34) with regard to the up-and-down direction of the body frame (21) so as to be able to turn about a right steering axis (Y) extending in the up-and-down direction of the body frame (21),
the left side member (53) supports an upper portion of the left shock absorber (33) with regard to the up-and-down direction of the body frame (21) so as be able to turn about a left steering axis (X) located parallel to the right steering axis (Y),
an upper cross member (51) and a lower cross member (52) disposed with regard to the up-and-down direction of the body frame (21),
the upper cross member (51) supports an upper portion of the right side member (54) at a right end portion of the upper cross member (51) so as to be able to turn about an upper right leaning axis extending in the front-and-rear direction of the body frame (21), and supports an upper portion of the left side member (53) at a left end portion of the upper cross member (51) so as to be able to turn about an upper left leaning axis located parallel to the upper right leaning axis, and
the lower cross member (52) supports a lower portion of the right side member (54) at a right end portion of the lower cross member (52) so as to be able to turn about a lower right leaning axis located parallel to the upper right leaning axis, and supports a lower portion of the left side member (53) at a left end portion of the lower cross member (52) so as be able to turn about a lower left leaning axis located parallel to the upper left leaning axis,
the upper cross member (51) and the lower cross member (52) are connected to the body frame (21) so as to be able to rotate about respective rotation axes thereof,
**characterized by** a carrier (100) disposed ahead of the linkage (5) with regard to a front-and-rear direction of the body frame (21),wherein
the carrier (100) is supported on the lower cross member (52) by a plurality of carrier supports (102), and
at least two of the carrier supports (102) are provided at positions shifted in the up-and-down direction of the body frame (21) when viewed from a side of the vehicle.

2. The straddle-type vehicle (1) according to claim 1, **characterized in that** the lower cross member (52) includes fixing portions (152) that fix the respective carrier supports (102) to at least two surfaces of an upper surface (52U), a lower surface (52D), a side surface (52S), a front surface (52F), and a rear surface (52B) with regard to up-and-down direction, the left-and-right direction and the front-and-rear direction of the body frame (21), respectively.

3. The straddle-type vehicle (1) according to claim 2, **characterized in that** the lower cross member (52) includes fixing portions (152) to which the respective carrier supports (102) are fixed, and when the lower cross member (52) is virtually divided into a right region and a left region with respect to a body center line (Z) with regard to the left-and-right direction of the body frame (21), at least a portion of the fixing portions (152) is disposed in the right region and the left region with regard to the left-and-right direction of the body frame (21).

4. The straddle-type vehicle (1) according to claim 2 or 3, **characterized in that** the lower cross member (52) includes at least three fixing portions (152).

5. The straddle-type vehicle (1) according to at least one of the claims 2 to 4, **characterized in that** the lower cross member (52) includes at least one fixing portion ahead of a front end portion of the upper cross member (51) with regard to the front-and-rear direction of the body frame (21).

6. The straddle-type vehicle (1) according to at least one of the claims 2 to 5, **characterized in that** at least one fixing portion is provided at an upper portion of the lower cross member (52) and is located ahead of a front end portion of the upper cross member (51) with regard to a front-and-rear direction when the vehicle turns.

7. The straddle-type vehicle (1) according to at least one of the claims 1 to 6, **characterized in that** the carrier (100) includes a lamp attachment portion (104) to which a lamp (103) is mounted.

8. The straddle-type vehicle (1) according to at least one of the claims 1 to 7, **characterized in that** at least one rear wheel (4) is supported on the body frame (21).

9. The straddle-type vehicle (1) according to at least one of the claims 1 to 8, **characterized by** a steering force transmission (6) including a handlebar (23), the steering force transmission (6) is configured to transmit steering force applied to the handlebar (23) to the left front wheel (31) and the right front wheel (32).

## Patentansprüche

1. Ein Spreiz-Sitz-Typ-Fahrzeug (1), das umfasst:
einen Körperrahmen (21);
ein rechtes Vorderrad (32) und ein linkes Vorderrad (31), die lenkbar sind und links und rechts in Bezug auf eine Links-und-Rechts-Richtung des Körperrahmens (21) angeordnet sind;
eine Lenkereinrichtung (5), die mit dem rechten Vorderrad (32) und dem linken Vorderrad (31) verbunden ist und konfiguriert ist, um eine relative Position des rechten Vorderrads (32) und des linken Vorderrads (31) zu ändern;
einen rechten Stoßdämpfer (34), der das rechte Vorderrad (32) an einem unteren Abschnitt desselben in Bezug auf eine Auf-und-Ab-Richtung des Körperrahmens (21) lagert und konfiguriert ist, um eine relative Verschiebung des rechten Vorderrades (32) in Bezug auf die Lenkereinrichtung (5) zu absorbieren;
einen linken Stoßdämpfer (33), der das linke Vorderrad (31) an einem unteren Abschnitt desselben in Bezug auf die Auf-und-Ab-Richtung des Körperrahmens (21) lagert und konfiguriert ist, um eine relative Verschiebung des linken Vorderrads (31) in Bezug auf die Lenkereinrichtung (5) zu absorbieren;
eine Leistungs-Einheit-Lagerung (251), die eine Leistungs-Einheit (25) an dem Körperrahmen (21) lagert, wobei die Lenkereinrichtung (5) enthält
ein rechtes Seitenelement (54) und ein linkes Seitenelement (53), die links und rechts in Bezug auf die Links-und-Rechts-Richtung des Körperrahmens (21) angeordnet sind,
das rechte Seitenelement (54) einen oberen Abschnitt des rechten Stoßdämpfers (34) in Bezug auf die Auf-und-Ab-Richtung des Körperrahmens (21) lagert, so dass es in der Lage ist sich um eine rechte Lenkachse (Y), die sich in der Auf-und-Ab-Richtung des Körperrahmens (21) erstreckt, zu drehen,
das linke Seitenelement (53) einen oberen Abschnitt des linken Stoßdämpfers (33) in Bezug auf die Auf-und-Ab-Richtung des Körperrahmens (21) lagert, so dass es in der Lage ist sich um eine linke Lenkachse (X) zu drehen, die parallel zu der rechten Lenkachse (Y) liegt,
ein oberes Querelement (51) und ein unteres Querelement (52), die in Bezug auf die Auf-und-Ab-Richtung des Körperrahmens (21) angeordnet sind,
das obere Querelement (51) einen oberen Abschnitt des rechten Seitenelements (54) an einem rechten Endabschnitt des oberen Querelements (51) lagert, so dass es in der Lage ist sich um eine obere rechte Neigungsachse zu drehen, die sich in der Vorder-und-Rück-Richtung des Körperrahmens (21) erstreckt, und einen oberen Abschnitt des linken Seitenelements (53) an einem linken Endabschnitt des oberen Querelements (51) lagert, so dass es in der Lage ist sich um eine obere linke Neigungsachse zu drehen, die parallel zu der oberen rechten Neigungsachse liegt, und
das untere Querelement (52) einen unteren Abschnitt des rechten Seitenelements (54) an einem rechten Endabschnitt des unteren Querelements (52) lagert, so dass es in der Lage ist sich um eine untere rechte Neigungsachse zu drehen, die parallel zu der oberen rechten Neigungsachse liegt, und einen unteren Abschnitt des linken Seitenelements (53) an einem linken Endabschnitt des unteren Querelements (52) lagert, so dass es in der Lage ist sich um eine untere linke Neigungsachse zu drehen, die parallel zu der oberen linken Neigungsachse liegt,
das obere Querelement (51) und das untere Querelement (52) mit dem Körperrahmen (21) verbunden sind, so dass sie in der Lage sind sich um ihre jeweiligen Drehachsen zu drehen, **gekennzeichnet durch** einen Träger (100), der in Bezug auf eine Vorder-und-Rück-Richtung des Körperrahmens (21) vor der Lenkereinrichtung (5) angeordnet ist, wobei
der Träger (100) auf dem unteren Querträger (52) durch eine Mehrzahl von Trägerlagerungen (102) gelagert ist, und
zumindest zwei der Trägerlagerungen (102) an Positionen vorgesehen sind, die in der Auf-und-Ab-Richtung des Körperrahmens (21), von einer Seite des Fahrzeugs aus gesehen, versetzt sind.

2. Das Spreiz-Sitz-Typ-Fahrzeug (1) gemäß Anspruch 1, **dadurch gekennzeichnet, dass** das untere Querelement (52) Befestigungsabschnitte (152) enthält, welche die jeweiligen Trägerlagerungen (102) an zumindest zwei Flächen einer oberen Fläche (52U), einer unteren Fläche (52D), einer Seitenfläche (52S), einer vorderen Fläche (52F) und einer hinteren Fläche (52B) jeweils in Bezug auf die Auf-und-Ab-Richtung, die Links-und-Rechts-Richtung und die Vorder-und-Rück-Richtung des Körperrahmens (21) befestigen.

3. Das Spreiz-Sitz-Typ-Fahrzeug (1) gemäß Anspruch 2, **dadurch gekennzeichnet, dass** das untere Querelement (52) Befestigungsabschnitte (152) enthält, an denen die jeweiligen Trägerlagerungen (102) befestigt sind, und wenn das untere Querelement (52) in Bezug auf eine Körpermittellinie (Z) in Bezug auf die Links-und-Rechts-Richtung des Körperrahmens (21) virtuell in einen rechten Bereich und einen linken Bereich unterteilt ist, zumindest ein Teil der Befestigungsabschnitte (152) in dem rechten Bereich und dem linken Bereich in Bezug auf die Links-und-Rechts-Richtung des Körperrahmens (21) angeordnet ist.

4. Das Spreiz-Sitz-Typ-Fahrzeug (1) gemäß Anspruch 2 oder 3, **dadurch gekennzeichnet, dass** das untere Querelement (52) zumindest drei Befestigungsabschnitte (152) enthält.

5. Das Spreiz-Sitz-Typ-Fahrzeug (1) gemäß zumindest einem der Ansprüche 2 bis 4, **dadurch gekennzeichnet, dass** das untere Querelement (52) zumindest einen Befestigungsabschnitt vor einem vorderen Endabschnitt des oberen Querelements (51) in Bezug auf die Vorder-und-Rück-Richtung des Körperrahmens (21) enthält.

6. Das Spreiz-Sitz-Typ-Fahrzeug (1) gemäß zumindest einem der Ansprüche 2 bis 5, **dadurch gekennzeichnet, dass** zumindest ein Befestigungsabschnitt an einem oberen Abschnitt des unteren Querelements (52) vorgesehen ist und vor einem vorderen Endabschnitt des oberen Querelements (51) in Bezug auf eine Vorder-und-Rück-Richtung liegt, wenn das Fahrzeug abbiegt.

7. Das Spreiz-Sitz-Typ-Fahrzeug (1) gemäß zumindest einem der Ansprüche 1 bis 6, **dadurch gekennzeichnet, dass** der Träger (100) einen Lampenbefestigungsabschnitt (104) enthält, an dem eine Lampe (103) angebracht ist.

8. Das Spreiz-Sitz-Typ-Fahrzeug (1) gemäß zumindest einem der Ansprüche 1 bis 7, **dadurch gekennzeichnet, dass** zumindest ein Hinterrad (4) an dem Körperrahmen (21) gelagert ist.

9. Das Spreiz-Sitz-Typ-Fahrzeug (1) gemäß zumindest einem der Ansprüche 1 bis 8, **gekennzeichnet durch** eine Lenkkraftübertragung (6), die eine Lenkstange (23) enthält, die Lenkkraftübertragung (6) ist konfiguriert, um eine Lenkkraft, die auf die Lenkstange (23) aufgebracht ist, auf das linke Vorderrad (31) und das rechte Vorderrad (32) zu übertragen.

## Revendications

1. Véhicule à selle (1) comprenant :
un cadre (21),
une roue avant droite (32) et une roue avant gauche (31) qui peuvent être dirigées et qui sont disposées sur la gauche et la droite par rapport à la direction gauche droite du cadre (21),
une liaison (5) qui est reliée à la roue avant droite (32) et à la roue avant gauche (31) et configurée pour changer la position relative de la roue avant droite (32) et de la roue avant gauche (31),
un amortisseur droit (34) qui supporte la roue avant droite (32) au niveau de sa partie inférieure par rapport à la direction haut bas du cadre (21) et qui est configuré pour absorber un déplacement relatif de la roue avant droite (32) par rapport à la liaison (5),
un amortisseur gauche (33) qui supporte la roue avant gauche (31) au niveau de sa partie inférieure par rapport à la direction haut bas du cadre (21) et qui est configuré pour absorber un déplacement relatif de la roue avant gauche (31) par rapport à la liaison (5),
un support d'unité de puissance (251) qui supporte une unité de puissance (25) sur le cadre (21),
dans lequel la liaison (5) inclut :
un élément du côté droit (54) et un élément du côté gauche (53) disposés sur la gauche et la droite par rapport à la direction gauche droite du cadre (21),
l'élément du côté droit (54) supporte la partie supérieure de l'amortisseur droit (34) par rapport à la direction haut bas du cadre (21) de sorte à ce qu'il puisse tourner autour d'un axe de direction droit (Y) s'étendant dans la direction haut bas du cadre (21),
l'élément du côté gauche (53) supporte la partie supérieure de l'amortisseur gauche (33) par rapport à la direction haut bas du cadre (21) de sorte à ce qu'il puisse tourner autour d'un axe de direction gauche (X) parallèle à l'axe de direction droit (Y),
un élément transversal supérieur (51) et un élément transversal inférieur (52) disposés par rapport à la direction haut bas du cadre (21),
l'élément transversal supérieur (51) supporte la partie supérieure de l'élément du côté droit (54) au niveau d'une terminaison droite de l'élément transversal supérieur (51) de sorte à pouvoir tourner autour d'un axe d'inclinaison supérieur droit s'étendant dans la direction avant arrière du cadre (21), et il supporte la partie supérieure de l'élément du côté gauche (53) au niveau d'une terminaison gauche de l'élément transversal supérieur (51) de sorte à pouvoir tourner autour d'un axe d'inclinaison supérieur gauche parallèle à l'axe d'inclinaison supérieur droit, et
l'élément transversal inférieur (52) supporte la partie inférieure de l'élément du côté droit (54) au niveau d'une terminaison droite de l'élément transversal inférieur (52) de sorte à pouvoir tourner autour d'un axe d'inclinaison inférieur droit parallèle à l'axe d'inclinaison supérieur droit, et il supporte la partie inférieure de l'élément du côté gauche (53) au niveau d'une terminaison gauche de l'élément transversal inférieur (52) de sorte à pouvoir tourner autour d'un axe d'inclinaison inférieur gauche parallèle à l'axe d'inclinaison supérieur gauche,
l'élément transversal supérieur (51) et l'élément transversal inférieur (52) sont reliés au cadre (21) de sorte à pouvoir tourner autour de leurs axes de rotation respectifs,
**caractérisé par** un support (100) disposé en avant de la liaison (5) par rapport à la direction avant arrière du cadre (21), où
le support (100) est soutenu sur l'élément transversal inférieur (52) par une pluralité de supports porteurs (102), et
au moins deux des supports porteurs (102) sont placés à des positions décalées dans la direction haut bas du cadre (21) lorsqu'ils sont vus depuis un côté du véhicule.

2. Véhicule à selle (1) selon la revendication 1, **caractérisé en ce que** l'élément transversal inférieur (52) inclut des organes de fixation (152) qui immobilisent les supports porteurs (102) respectifs à au moins deux surfaces parmi une surface supérieure (52U), une surface inférieure (52D), une surface latérale (52S), une surface frontale (52F) et une surface arrière (52B) respectivement par rapport à la direction haut bas, à la direction gauche droite et à la direction avant arrière du cadre (21).

3. Véhicule à selle (1) selon la revendication 2, **caractérisé en ce que** l'élément transversal inférieur (52) inclut des organes de fixation (152) auquel sont fixés les supports porteurs (102) respectifs, et lorsque l'élément transversal inférieur (52) est divisé virtuellement en une zone droite et une zone gauche par rapport à l'axe central du corps (Z) par rapport à la direction gauche droite du cadre (21), au moins une partie des organes de fixation (152) est placée dans la zone droite et dans la zone gauche par rapport à la direction gauche droite du cadre (21).

4. Véhicule à selle (1) selon la revendication 2 ou la revendication 3, **caractérisé en ce que** l'élément transversal inférieur (52) inclut au moins trois organes de fixation (152).

5. Véhicule à selle (1) selon au moins l'une des revendications 2 à 4,
**caractérisé en ce que** l'élément transversal inférieur (52) inclut au moins un organe de fixation en avant de la partie avant de l'élément transversal supérieur (51) par rapport à la direction avant arrière du cadre (21).

6. Véhicule à selle (1) selon au moins l'une des revendications 2 à 5,
**caractérisé en ce qu'**au moins un organe de fixation est disposé au niveau d'une partie supérieure de l'élément transversal inférieur (52) et **en ce qu'**il est situé en avant de la partie avant de l'élément transversal supérieur (51) par rapport à la direction avant arrière lorsque le véhicule tourne.

7. Véhicule à selle (1) selon au moins l'une des revendications 1 à 6,
**caractérisé en ce que** le support (100) inclut un organe de fixation d'ampoule (104) sur lequel est montée une ampoule (103) .

8. Véhicule à selle (1) selon au moins l'une des revendications 1 à 7,
**caractérisé en ce qu'**au moins une roue arrière (4) est supportée sur le cadre (21).

9. Véhicule à selle (1) selon au moins l'une des revendications 1 à 8,
**caractérisé par** une force de transmission de braquage (6) incluant un guidon (23) la force de transmission de braquage (6) étant configurée pour transmettre une force de braquage appliqué sur le guidon (23) à la roue avant gauche (31) et à la roue avant droite (32).
